Europäisches Patentamt

European Patent Office

Office européen des brevets

(11) Publication number: **0 485 983 A1**

# EUROPEAN PATENT APPLICATION

(21) Application number: **91119349.8**

(22) Date of filing: **13.11.91**

(51) Int. Cl.⁵: **C08F 255/02**, //(C08F255/02, 222:06)

(30) Priority: **13.11.90 IT 2203890**

(43) Date of publication of application:
**20.05.92 Bulletin 92/21**

(84) Designated Contracting States:
**DE ES FR GB IT NL SE**

(71) Applicant: **Himont Incorporated**
**2801 Centerville Road**
**New Castle County Delaware(US)**

(72) Inventor: **Perego, Gabriele**
**3, via Fossigalli**
**I-10015 Ivrea, Torino(IT)**
Inventor: **Galimberti, Maurizio**
**4, via Vertoiba**
**I-20137 Milano(IT)**
Inventor: **Albizzati, Enrico**
**64, via Roma**
**I-28041 Arona, Novara(IT)**

(74) Representative: **Zumstein, Fritz, Dr. et al**
**Dr. F. Zumstein Dipl.-Ing. F. Klingseisen**
**Bräuhausstrasse 4**
**W-8000 München 2(DE)**

(54) **Grafted syndiotactic polypropylene.**

(57) Disclosed is a syndiotactic polypropylene modified by grafting monomers which contain functional groups. The preparation is carried out by reacting the syndiotactic polypropylene with the monomers at temperatures of from 80°C to 250°C.

EP 0 485 983 A1

Rank Xerox (UK) Business Services
(-/2.19/2.0)

The present invention relates to a syndiotactic polypropylene grafted with monomers which contain functional groups.

The chemical inertia of hydrocarbon polymers accounts for their good stability and durability characteristics. On the other hand this same lack of reactivity limits the use of these materials. Some applications are favored by the different nature of the surface or different physical properties with respect to the hydrocarbon polymer as produced, as in cases where one requires good adherence to other materials, such as charges or fibers, miscibility with other polymers, to be used in paints, as well as other various applications. An important and versatile method of achieving these results consists of grafting onto hydrocarbon polymers some polymerizable monomers, or compounds which modify the characteristics of the material and its chemical reactivity.

Said modifications are described in the literature in a number of publication and patents, among which are J. Pol. Sci.: Pol Lett. Ed., Vol 21, 23-30 (1983); Acta Polymerica, Vol. 36, 361-365 (1985); U.S.P. 3,414,551; U.S.P. 3,652,730; U.S.P. 4,506,056.

Maleic anhydride is among the monomers most used in polyolefin grafting reactions, allowing, among other things, the possibility of grafting reactions in solution, in a dry solid state, in the melt, in an aqueous suspension, and by radiation, as well as the possibility of carrying out with ease further modification reactions.

Grafting in solution presents various advantages, such as the possibility of carrying out reactions in various manners, the potential reactivity of every part of the polymeric chains, and in the case of polyethylene, eliminating undesired cross-linking reactions.

In general this method offers the possibility of limiting significantly the degradation of the polymer.

Recently, through the use of new catalyst systems which operate in a homogeneous phase, a syndiotactic polypropylene having a high degree of tacticity (about 85% of r,r pentads) and high yield is now available (J. A. Ewen, R. L. Jones, A. Razavi, J. D. Ferrara, J. Am. Chem. Soc., vol 110, 6255-56, 1988).

It has been found that the syndiotactic polypropylene, as compared to isotactic the polypropylene and under equal processing conditions, allows the grafting of greater quantities of monomer. Moreover the grafting can be carried out under less severe conditions, with equal content of grafted monomer. Therefore less degradation of the polymeric material takes place during the grafting reaction. This advantage is particularly important when operating in the molten state.

The syndiotactic grafted polypropylene of the invention opens interesting avenues of application for the syndiotactic polypropylene, both in terms of modification of its chemical and physical characteristics and the preparation of grafted copolymers.

Grafting with vinyl monomers is generally carried out using a free radical initiator at temperatures in which the autodecomposition of the initiator is activated.

The unsaturated monomer can be bonded as distinct units, or as polymer chains of various lengths.

Grafting methods suitable for the present invention include conducting the grafting reaction in solution by using appropriate inert solvents, or in the molten state by mixing the polymer, the monomer to be grafted, the initiator and optionally a stabilizer. Moreover, it is possible to carry out said reactions in a dry solid state, by maintaining the polymer at a temperature lower than the melting point of the polymer, but sufficient to allow the decomposition of the initiator, or in aqueous suspension by bringing the temperature above 100°C using an autoclave, or by radiation.

Grafting in solution has many advantages, among which is the versatility and efficient standardization of the method, besides the potential reactivity of every part of the polymer chains.

Suitable solvents for the solution grafting are inert solvents which allow solubilization of the polypropylene used, such as benzene, toluene, xylene, tetrachloroethane, o-dichlorobenzene.

Suitable free radical initiators include acyl peroxides such as benzoyl peroxide, dialkyl or aralkyl peroxides such as di-tert-butyl peroxide, dicumyl peroxide, cumyl butyl peroxide, 1,1-di-tert-butyl peroxypivalate, tert-butyl perbenzoate, t-butyl peroctanoate, tert-butyl di (perphthalate), dialkyl peroxymonocarbonate, and peroxydicarbonates.

Adjuvants capable of reducing the degradation reactions of the polymer when they become significant include various compounds containing nitrogen, phosphorous and sulfur, for example, N-methylacetamide, N, N-dimethylacetamide, triphenylphosphine, triethyl phosphate and dimethyl sulfoxide.

The preferred monomers for the modification of the polymer are mono and polycarboxylic acids containing from 3 to 20 carbon atoms, and at least one olefinic unsaturation, as well as derivatives of said acids, such as anhydrides, esters, amides, salts, nitriles and thioacids. Examples of said acids, anhydrides and other derivatives include maleic acid, acrylic acid, fumaric acid, itaconic acid, glycidyl acrilate, cyanoacrylates, hydroxyalkyl methacrylates containing from 3 to 20 carbon atoms, acrylic polyesters, methacrylic acid, crotonic acid, isocrotonic acid, maleic anhydride, itaconic anhydride, acrylonitrile, methacrylonitrile, sodium acrylate.

Other monomers which can be used alone or in combination with the above described unsaturated carboxylic acids or their derivatives include vinyl monomers containing from 2 to 20 carbon atoms, including styrene, chlorostyrenes, bromostyrenes and vinylpyridines. Other monomers which can be used are vinyl esters, such as vinyl butyrate, vinyl laurate, vinyl stearate, vinyl adipate, or allyl esters or vinyl ethers, or monomers having two or more vinyl or allyl groups, such as divinylbenzene, triallylphosphine and triallyl cyanurate.

Generally, all compounds which are capable of causing a radical grafting reaction to the syndiotactic polypropylene, are suitable.

The quantity of monomer grafted to the syndiotactic polypropylene is preferably from 0.1 to 10% by weight.

The quantity of the radical initiator used is preferably from 0.01 to 10%, more preferably from 0.1 to 3% by weight based on the polymer. The monomer to be grafted is used in quantities preferably from 0.1 to 100%, more preferably from 10 to 100% by weight based on the polymer.

In carrying out the process in solution, the monomer and initiator are preferably both added to the polymer, then the solvent is introduced and the temperature is brought to the desired values, while maintaining the system under agitation. Suitable temperatures are those where the mixture of reagents and solvent is homogeneous and the decomposition of the initiator is activated.

The following examples are given in order to illustrate and not limit the invention.

## Example 1

Into a 100 ml flask equipped with a stirrer and with three necks were introduced 2.0 g of syndiotactic polypropylene with Mw = 200,000, 2.0 g of maleic anhydride, 1.24 g of benzoyl peroxide, and 25 ml of xylene. The system was brought to 120°C, which was the temperature at which one obtains a homogeneous and well stirred solution, and was maintained under these conditions for a total of three hours. It was cooled and precipitated in 200 ml of methanol for 12 hours under stirring at room temperature. Then the polymer was filtered, extracted hot with acetone to remove the nongrafted maleic anhydride completely and dried. Determination of the carboxyls, and therefore the grafted maleic anhydride, was carried out by titation of a polymeric solution at 130°C with 0.1 N sodium hydroxide in methanol and phenolphthalein.

The calculated concentration of grafted maleic anhydride was 1.38% by weight with respect to the polymer.

## Comparative Example 1

The procedure and ingredients of Example 1 were used except that an isotactic polypropylene sample with Mw = 200,000 was used. A concentration of maleic anhydride equal to 0.62% was calculated by way of carboxyl titration.

## EXAMPLE 2

The procedure and ingredients of Example 1 were used except that a syndiotactic polypropylene sample with Mw = 150,000 was used. A concentration of grafted maleic anhydride equal to 1.64% was calculated by way of carboxyl titration.

## Comparative Example 2

The procedure and ingredients of Example 2 were used except that an isotactic polypropylene sample with Mw = 150,000 was used. A concentration of maleic anhydride equal to 1.00% was calculated by way of carboxyl titration.

## EXAMPLE 3

The procedure and ingredients of Example 1 were used except that 2.0 g syndiotactic polypropylene sample with Mw = 150000, 1.47 g acrylic acid, 1.24 g benzoyl peroxide, and 25 ml of xylene were used. A concentration of grafted acrylic acid equal to 3.45% was calculated by way of carboxyl titration.

## Comparative Example 3

The procedure and ingredients of Example 3 were used except that an isotactic polypropylene sample with Mw = 150,000 was used. A concentration of carboxyls equal to 2.64% was calculated by way of carboxyl titration.

## Claims

1. A syndiotactic polypropylene grafted with monomers which contain functional groups.

2. A syndiotactic polypropylene grafted with $\alpha$-$\beta$ unsaturated acids containing from 3 to 20 carbon atoms and their derivatives.

3. A syndiotactic polypropylene grafted with maleic anhydride.

4. The syndiotactic polypropylene according to claim 3 wherein the quantity of grafted maleic anhydride is from 0.1 to 10% by weight.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 414 551 (REID ET AL.)<br>* column 1, line 15 - line 18; claim 1; examples * | 1-4 | C08F255/02<br>//(C08F255/02, 222:06) |
| Y | EP-A-0 395 055 (MITSUI TOATSO CHEM.)<br>* claim 1 * | 1-4 | |
| A | WORLD PATENTS INDEX LATEST<br>Week 7445,<br>Derwent Publications Ltd., London, GB;<br>AN 74-78180V<br>& JP-A-49 042 792 (UBE IND. LTD.) 22 April 1974<br>* abstract * | 1-4 | |
| | | | **TECHNICAL FIELDS SEARCHED (Int. Cl.5)** |
| | | | C08F |

The present search report has been drawn up for all claims

| Place of search | Date of completion of the search | Examiner |
|---|---|---|
| THE HAGUE | 25 MARCH 1992 | LOISELET-TAISNE S. |